# EUROPEAN PATENT APPLICATION

(11) **EP 4 506 064 A1**
(43) Date of publication of application: **12.02.2025**
(21) Application number: 24193368.8
(22) Date of filing: 07.08.2024
(51) Int. Cl.: B05B 13/04, B05B 1/08, B05B 15/58, B41J 2/18, B25J 11/00, B41J 3/407

(54) **PAINTING ROBOT**

(30) Priority: 07.08.2023 JP 2023128770
(71) Applicant: ABB SCHWEIZ AG, 5400 Baden (CH)
(72) Inventor: TAWATA, Takahiro, Shinagawa-ku, 141-6022 (JP)
(74) Representative: Zimmermann & Partner Patentanwälte mbB

(57) **Abstract**

[Problem]

The aim of the present invention is to provide a painting robot that is capable of reducing the effects of pressure fluctuations and ensuring a pressure range that enables the use of a pneumatic control valve.

[Means for Solving]

Painting robot 10 is provided with painting head unit 50 comprising a plurality of nozzles 54 to eject droplets and painting head 53 that is provided with piezoelectric substrate 62 to eject the droplets from nozzles 54, robot arm R1 to move said painting head unit 50 to a desired position, and paint supply mechanism 70 that may be installed between robot arm R1 and painting head unit 50. Also, paint supply mechanism 70 is provided with paint supply channel 72 to provide paint towards painting head 53, return flow channel 73 to recover paint that was not discharged from nozzle 54, AOPR 92 that has been installed in paint supply channel 72 for which the valve opening position can be adjusted in response to the controlled air pressure, and orifice 96 that has been installed on the downstream side of paint supply channel 72 facing painting head 53 side from AOPR 92.

## Description

### [Technical Field]

The present invention relates to a painting robot.

### [Background Art]

Robotic painting using robots has become the mainstream in painting lines for vehicles such as automobiles. As an example of this robotic painting configuration, there has been disclosure of a configuration provided with a painting head (56) capable of dispensing paint through the actuation of a piezoelectric substrate (109) and that is also provided with a paint circulation device (51) to supply paint to the painting head (56), such as the paint robot disclosed in Patent Literature 1.

### [Prior Art Literature]

### [Patent Literature]

[Patent Literature 1] Japanese Examined Patent Application Publication No. 7203258

### [Summary of the Invention]

### [Problem to be Solved by the Invention]

Incidentally, in the configuration in Patent Literature 1, the effect of pressure fluctuations can affect the stable discharge of paint from the painting head. For example, assuming that the driving state of the gear pump (62) supplying paint from the upstream side or the actuation of the proportional valve (71) in relation to the input of a pressure of 5 kPa results in a pressure fluctuation of approximately ±1 kPa, the rate of effect of the pressure fluctuation may be, for example, 20%, which could destabilize the discharge of paint.

In addition, in an environment in which vehicles are painted, consideration has been given to the use of an air-operated paint regulator (AOPR) that is controlled by air pressure without using a proportional valve, which is an electrical device, as an effort to achieve explosion-proofing, etc. However, AOPR cannot be used in the configuration disclosed in Patent Literature 1 because, with an AOPR, the operable pressure range is higher than that of the proportional control valve.

The present invention was created based on the abovementioned circumstances and is intended to provide a painting robot that is capable of reducing the effects of pressure fluctuations and ensuring a pressure range that enables the use of a pneumatic control valve.

### [MEANS FOR SOLVING THE PROBLEM]

In order to solve the abovementioned problem, the first aspect of the present invention provides a painting robot to paint a vehicle that is characterized by the fact that it is provided with a painting head unit comprising a plurality of nozzles to eject droplets and a painting head that is provided with a piezoelectric substrate that may be driven to eject the droplets from the nozzles, a robot arm to which the painting head unit is mounted at the tip and that will move said painting head unit to a desired position, and a paint supply mechanism that may be installed between the robot arm and the painting head unit, wherein the paint supply mechanism is provided with a paint supply channel to provide paint towards the painting head, a return flow channel that is connected to the paint discharge side of the painting head in order to recover paint that was not discharged from the nozzle, a pneumatic control valve that has been installed in the paint supply channel for which the valve opening position can be adjusted in response to the controlled air pressure, and a pressure boosting mechanism that has been installed on the downstream side of the paint supply channel facing the painting head side from the pneumatic control valve or on the upstream side of said pneumatic control valve and that will increase the pressure of the paint that may be supplied to the pneumatic control valve.

Also, in the abovementioned invention, the return flow channel is preferably provided with an electrical control valve that can adjust the valve opening position through electrical operation.

Also, in any of the inventions described above, it is preferable for the pressure boosting mechanism to be an orifice with an inner diameter that is narrower than that of the paint supply channel, wherein this orifice is constructed of a single hole or a plurality of holes.

Also, in any of the inventions described above or in a combination thereof, it is preferable for the pressure boosting mechanism to be a removal filter to remove foreign matter contained within the paint flowing through the paint supply channel.

Also, in any of the inventions described above or in a combination thereof, it is preferable for the paint supply mechanism to be provided with a bypass channel connecting the paint supply channel and the return flow channel in order to distribute the paint in parallel to the painting head, wherein the pressure boosting mechanism is installed on the upstream side of the paint supply channel in relation to the bypass channel.

Also, in any of the inventions described above or in a combination thereof, it is preferable for the orifice to enable adjustment of the opening of the flow channel through which the paint flows.

### [Effect of the Invention]

According to the present invention, it will be possible to provide a painting robot that is capable of reducing the effects of pressure fluctuations and ensuring a pressure range that enables the use of a pneumatic control valve.

### [Brief Description of the Drawings]

[Figure 1] This is a schematic diagram showing the overall configuration of the painting robot according to one example of embodiment of the present invention.
[Figure 2] This is a diagram showing the front surface view of the nozzle forming surface for the nozzles that will eject the paint in the painting robot shown in Figure 1.
[Figure 3] This is a diagram showing the state in which multiple painting heads are arranged in a staggered shape in the painting robot shown in Figure 1.
[Figure 4] This is a diagram showing a schematic configuration of the supply of paint to each nozzle in the painting robot shown in Figure 1.
[Figure 5] This is a cross-sectional view showing the configuration near the row direction supply channel, the nozzle pressurization chamber, and the row direction discharge channel shown in Figure 4.
[Figure 6] This is a plan view showing the configuration of the nozzle forming surface in another painting head unit that is different from the painting head unit shown in Figure 2.
[Figure 7] This is a diagram showing a schematic configuration of the paint supply mechanism or the like provided in the painting robot shown in Figure 1.
[Figure 8] This is a diagram showing an example of the configuration of the orifice provided in the paint supply mechanism shown in Figure 7.
[Figure 9] This is a diagram showing the orifice in another configuration different from the orifice shown in Figure 8.
[Figure 10] These are diagrams showing the orifice in other configurations different from the orifice shown in Figure 8 and Figure 9.
[Figure 11] This is a diagram showing a schematic configuration of the paint supply control unit in the painting robot shown in Figure 1.
[Figure 12] This is a diagram that shows the experimental results for the relationship between the flow rate and pressure losses when the inner diameter of the orifice provided in the paint supply mechanism shown in Figure 7 is set to 0.75 mm, 1.0 mm, and 1.2 mm.

### [Best Embodiments of the Invention]

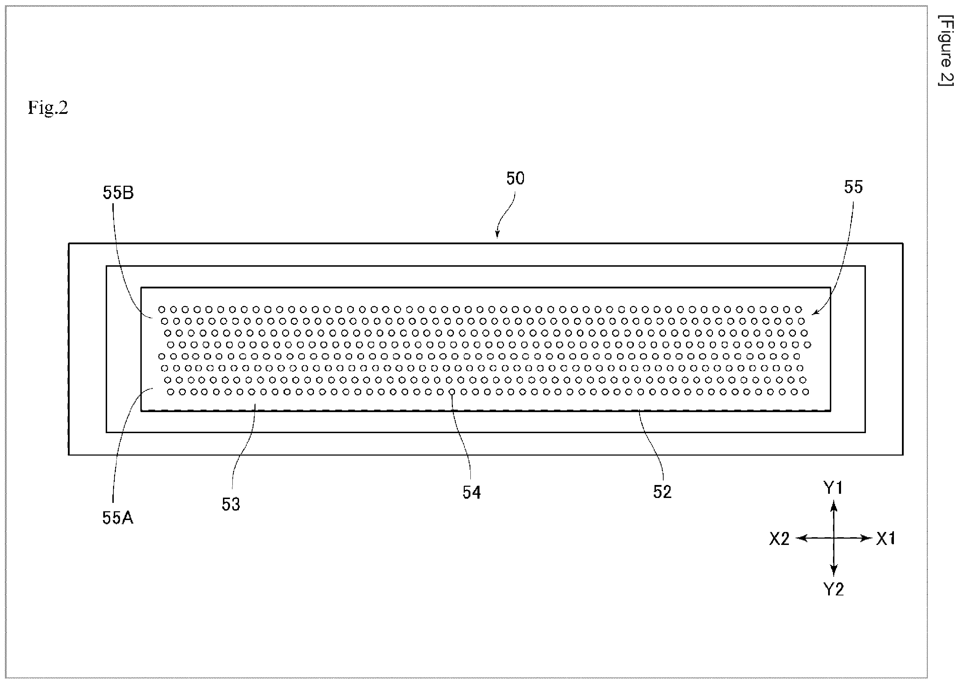

Painting robot 10 pertaining to each example of embodiment of the present invention will be described below with reference to the drawings. In the following description, if necessary, the X-direction is the longitudinal direction of nozzle forming surface 52 (painting head 53), while the X1 side is the right side in Figure 2, and the X2 side is the left side in Figure 2. The Y-direction is the short direction (width direction) of nozzle forming surface 52 (painting head 53), while the Y1 side is the upper side of the paper surface in Figure 2, and the Y2 side is the lower side of the paper surface in Figure 2.

### (1. Overview of ink jet painting robot 10)

Painting robot 10 of the present example of embodiment is intended to "paint" an object, such as a vehicle or vehicle part (hereinafter, vehicle parts that form a part of a vehicle shall also be described as a vehicle) positioned on a painting line in a car manufacturing plant, and to form a paint film on the surface of the object to be painted in order to protect that surface or to beautify that surface. Therefore, it is necessary to paint vehicles moving along the painting line at predetermined time intervals with a desired painting quality within a certain period of time.

In addition, in painting robot 10 of the present example of embodiment, it will be possible to not only form the abovementioned paint film, but it will also be possible to form various designs or images on the object to be painted, such as vehicles and vehicle parts. It should be noted that the object to be painted is not limited to vehicles and vehicle parts, and this object may be anything that requires painting, such as various parts for objects other than vehicles (for example, the exterior parts of airplanes or railways).

### (1-1. Overall construction of inkjet painting robot 10)

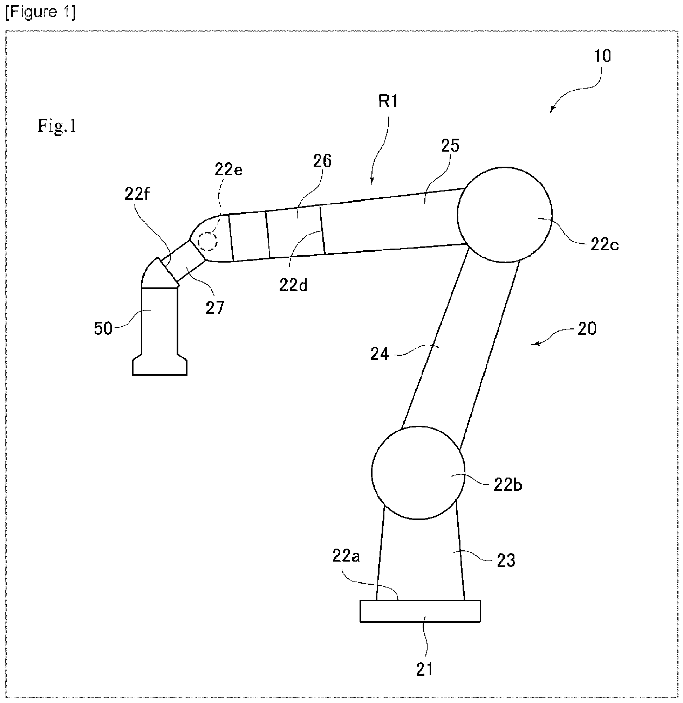

Figure 1 is a schematic diagram showing the overall configuration of painting robot 10 according to the first example of embodiment of the present invention. As shown in Figure 1, painting robot 10 has robot main body 20 and painting head unit 50 as its main components. Although painting robot 10 shown in Figure 1 is a six-axis vertically articulated robot that is shown as an example thereof, painting robot 10 may be any type of robot, such as a non-six-axis vertically articulated robot, a horizontally articulated robot, or an orthogonal robot, etc.

### (1-2. Robot overall)

As shown in Figure 1, robot main body 20 has as its main components base 21, first through sixth rotating shafts 22a to 22f, leg unit 23, first turning arm 24, second turning arm 25, rotating arm 26, wrist unit 27, and a motor (not shown in the figure) to drive these components. The portion from leg unit 23 to wrist unit 27 corresponds to robot arm R1, but it is also acceptable for other portions, such as base 21 or the like, to correspond to robot arm R1.

Among these, base 21 is a unit that may be installed on the installation site such as a floor surface, but base 21 may be movable with respect to the installation site. Also, leg unit 23 is a portion that stands facing upward from base 21, and it is installed such that it may rotate in relation to base 21 via first rotating shaft 22a when driven by the motor (first motor) that is omitted from the figure. Leg unit 23 may also be configured so that it cannot rotate in relation to base 21.

Also, at the upper end of leg unit 23, first turning arm 24 is provided such that it can rotate via second rotating shaft 22b when driven by the motor (second motor) that is omitted from the drawing. Further, on the tip side of first turning arm 24, second turning arm 25 is provided such that it can rotate via third rotating shaft 22c when driven by the motor (third motor) that is omitted from the drawing.

Also, on the tip side of second turning arm 25, rotating arm 26 is provided such that it can rotate about the central axis of second turning arm 25. This rotating arm 26 may be rotated via fourth rotating shaft 22d when driven by the motor (fourth motor) that is omitted from the drawing. In addition, wrist unit 27 is provided on the tip side of rotating arm 26. This wrist unit 27 enables rotational movement around multiple (e.g., two) shafts of different orientations. In Figure 1, this rotating shaft capable of rotational movement refers to fifth rotating shaft 22e and sixth rotating shaft 22f, respectively. As a result, the orientation of painting head unit 50 can be controlled with high accuracy. It should be noted that the number of shafts may be any number as long as the number is two or more.

In addition, painting head unit 50 is attached to wrist unit 27, but painting head unit 50 may be provided such that it may be freely attached to or detached from wrist unit 27.

### (1-3. Painting head unit)

Painting head unit 50 will be described next. Figure 2 is a diagram that shows the front view of nozzle forming surface 52 for the nozzles to discharge the paint within painting head unit 50. As shown in Figure 2, painting head unit 50 is provided with a head cover (not shown in the figure), and various components are built into this head cover. As shown in Figure 2, nozzle forming surface 52 is provided with a plurality of nozzle rows 55 in which nozzles 54 are inclined relative to the longitudinal direction of painting head unit 50. This nozzle row 55 is provided in the present example of embodiment with first nozzle row 55A that is present on one side (Y2 side) of the main scanning direction (Y direction) and second nozzle row 55B that is present on the other side (Y1 side) of the main scanning direction.

Note that when the paint is to be discharged, the drive timing of each nozzle 54 is controlled such that, between the droplets discharged from the adjacent nozzle 54 in first nozzle row 55A, the droplets discharged from nozzle 54 in second nozzle row 55B are discharged. As a result, it will be possible to improve the dot density during painting.

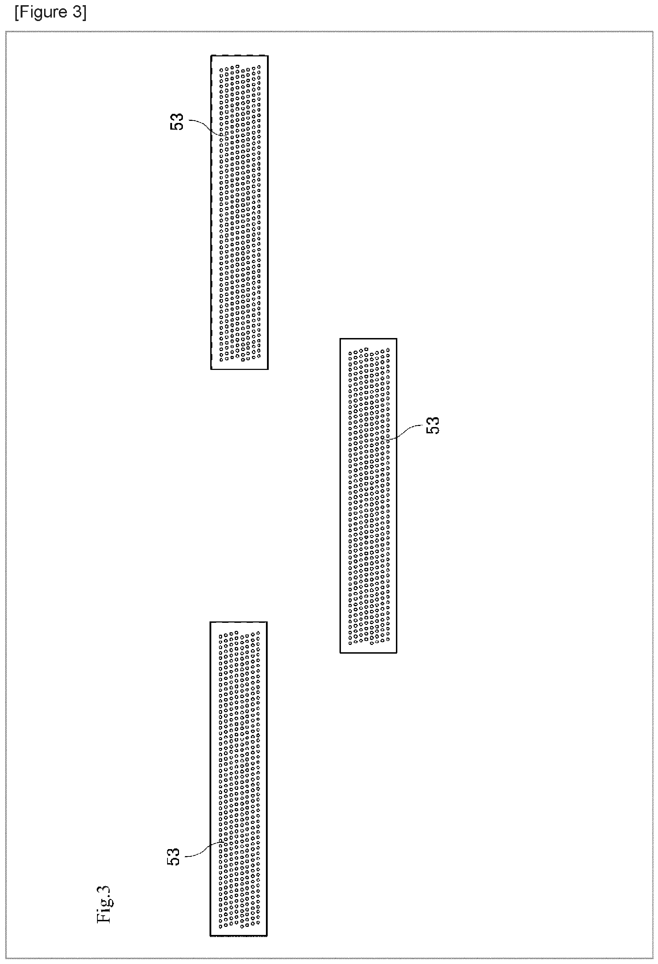

Incidentally, as shown in Figure 2, there is a single painting head 53 in nozzle forming surface 52. However, nozzle forming surface 52 may also have a head group consisting of a plurality of painting heads 53. In this case, Figure 3 shows an example of a configuration in which the plurality of painting heads 53 are arranged in an aligned and staggered arrangement, but the arrangement of painting heads 53 in the head group does not have to be a staggered arrangement.

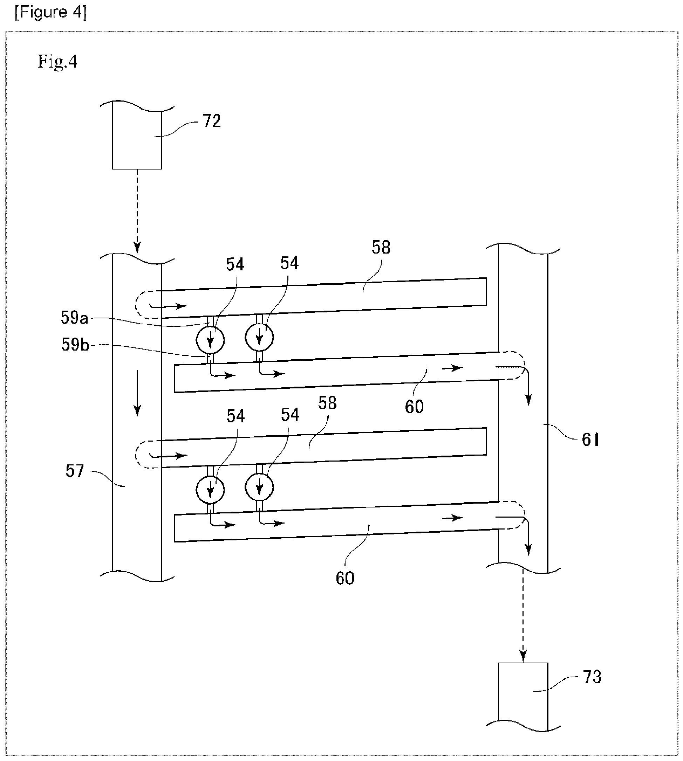

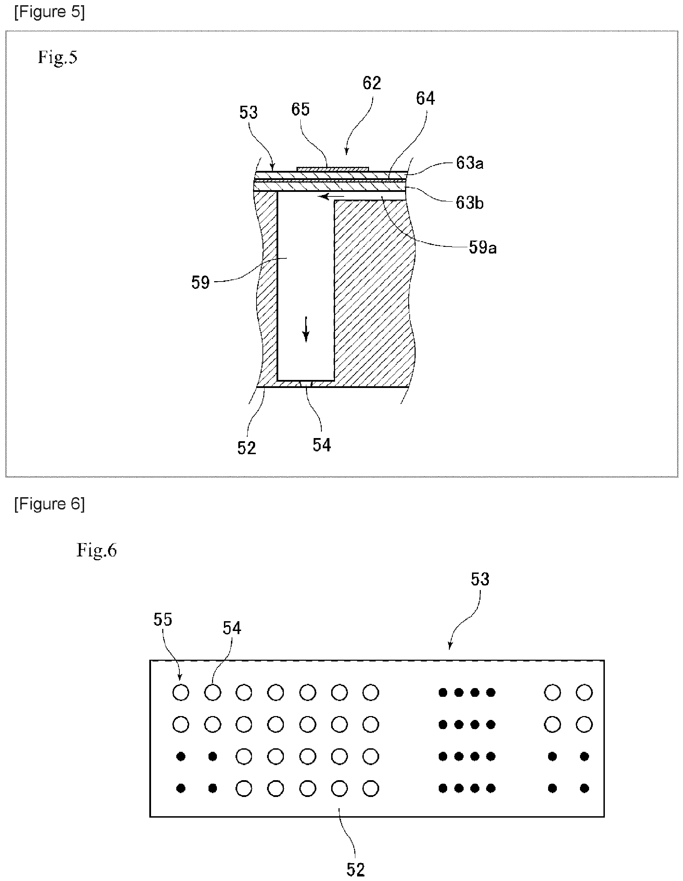

Figure 4 is a diagram that shows a schematic configuration to supply paint to each nozzle 54. Figure 5 a cross-sectional view showing the configuration near row direction supply channel 58, nozzle pressurization chamber 59, and row direction discharge channel 60. As shown in Figure 4 and Figure 5, painting head 53 is provided with supply side major flow channel 57, row direction supply channel 58, nozzle pressurization chamber 59, row direction discharge channel 60, and discharge side major flow channel 61. Supply side major flow channel 57 is a channel through which paint may be supplied from paint supply channel 72 of paint supply mechanism 70, which will be described later. Also, row direction supply channel 58 is a channel into which the paint in supply side major flow channel 57 may be diverted.

Nozzle pressurization chamber 59 is also connected via row direction supply channel 58 and nozzle supply channel 59a. As a result, nozzle pressurization chamber 59 is supplied with the paint from row direction supply channel 58. This nozzle pressurization chamber 59 may be provided to match the number of nozzles 54, making it possible to discharge the paint contained within from nozzles 54 using piezoelectric substrate 62, which will be described later.

Nozzle pressurization chamber 59 is also connected to row direction discharge channel 60 via nozzle discharge channel 59b. Therefore, the paint that was not discharged from nozzles 54 may be discharged from within nozzle pressurization chamber 59 into row direction discharge channel 60 via nozzle discharge channel 59b. Line direction discharge channel 60 is also connected to discharge side major flow channel 61. Discharge side major flow channel 61 is a channel to merge the paint that was discharged from row direction discharge channel 60. This discharge side major flow channel 61 is connected to return flow channel 73 of paint supply mechanism 70, which will be described later.

As a result of this type of configuration, the paint that is supplied from paint supply channel 72 of paint supply mechanism 70, which will be described later, is discharged from nozzle 54 via supply side major flow channel 57, row direction supply channel 58, nozzle supply channel 59a, and nozzle pressurization chamber 59. The paint that was not discharged from nozzle 54 is also returned from nozzle pressurization chamber 59 through nozzle discharge channel 59b, row direction discharge channel 60, and discharge side major flow channel 61 to return flow channel 73 of paint supply mechanism 70, which will be described later.

In the configuration shown in Figure 4, the arrangement is such that a single row direction supply channel 58 is corresponds to a single row direction discharge channel 60. However, it is also acceptable to have an arrangement in which a single row direction supply channel 58 corresponds to multiple (e.g., two) row direction discharge channels 60. Also, it is acceptable to have an arrangement in which a single discharge channel 60 corresponds to a plurality of row direction supply channels 58.

Also, as shown in Figure 5, piezoelectric substrate 62 is mounted on the top surface of nozzle pressurization chamber 59 (the side opposite to nozzle 54). Piezoelectric substrate 62 is provided with two piezoelectric ceramic layers 63a and 63b, which are piezoelectric substances, and is further provided with common electrode 64 and individual electrode 65. Piezoelectric ceramic layers 63a and 63b are extendable members that may telescope as a result of the application of voltage from the outside. Examples of the material that may be used as these piezoelectric ceramic layers 63a and 63b include, for instance, ceramic materials with ferroelectric properties such as lead zirconate titanate (PZT) ceramic material, NaNbO3 ceramic material, BaTiO3 ceramic material, (BiNa) NbO3 ceramic material, and BiNaNb5O15 ceramic material.

Also, as shown in Figure 5, common electrode 64 is mounted between piezoelectric ceramic layer 63a and piezoelectric ceramic layer 63b. In addition, surface electrode (not shown in the figure) for use as a common electrode is formed on the top surface of piezoelectric substrate 62. Common electrode 64 and the surface electrode for use as the common electrode are electrically connected through a conductor (not shown in the figure) present in piezoelectric ceramic layer 63a. Individual electrodes 65 are also each mounted at a site opposite to nozzle pressurization chamber 59 described above. Furthermore, the portion of piezoelectric ceramic layer 63a that is sandwiched between common electrode 64 and individual electrode 65 is polarized in the thickness direction. Therefore, upon the application of voltage to individual electrode 65, the piezoelectric effect distorts piezoelectric ceramic layer 63a. Therefore, applying a predetermined drive signal to individual electrode 65 causes piezoelectric ceramic layer 63b to fluctuate relatively to reduce the volume of nozzle pressurization chamber 59, thereby forcing the discharge of the paint.

Although common electrode 64 is mounted on the top surface of nozzle pressurization chamber 59 in Figure 5, common electrode 64 is not limited to a configuration in which it is mounted on the top surface of nozzle pressurization chamber 59 as shown in Figure 5. For example, it is also acceptable to adopt a configuration in which common electrode 64 is mounted on the side surface of nozzle pressurization chamber 59 (a surface that is orthogonal or substantially orthogonal to the top surface), and it is also acceptable to use any other configuration as long as it is possible to favorably discharge the paint from nozzle 54.

### (1-4. Other configurations of the painting head unit)

Other configurations of painting head unit 50 will be described next. Figure 6 is a plan view illustrating the configuration of nozzle forming surface 52 of another painting head unit 50. As shown in Figure 6, multiple nozzles 54 may be aligned along the short direction (width direction; Y direction) of painting head 53 to constitute nozzle row 55. In the configuration shown in Figure 6, the plurality of nozzles 54 constitutes a row of nozzles 55 in line with the short direction (width direction; main scanning direction) of painting head 53, but it is also acceptable to have a configuration in which only one (single) nozzle 54 is arranged in the short direction (width direction; main scanning direction) of painting head 53. In other words, nozzle row 55 may be comprised of one nozzle 54.

Also, when painting a vehicle with painting head 53 as shown in Figure 6, the painting may be performed with the longitudinal direction of painting head 53 slightly tilted relative to the main scanning direction of painting head 53. For example, in the configuration of painting head 53 shown in Figure 2, if nozzle row 55 is inclined by an angle α relative to the main scanning direction, the longitudinal direction of painting head 53 may be inclined by an angle α relative to the main scanning direction of painting head 53. When tilted in this way, it will be possible to achieve painting that is equivalent to that of painting head 53 shown in Figure 2 simply by adjusting the discharge timing of the paint from each nozzle 54.

### (1-5. Paint supply mechanism)

Next, paint supply mechanism 70 and the air bubble removal member and flow meter provided in paint supply mechanism 70 will be described.

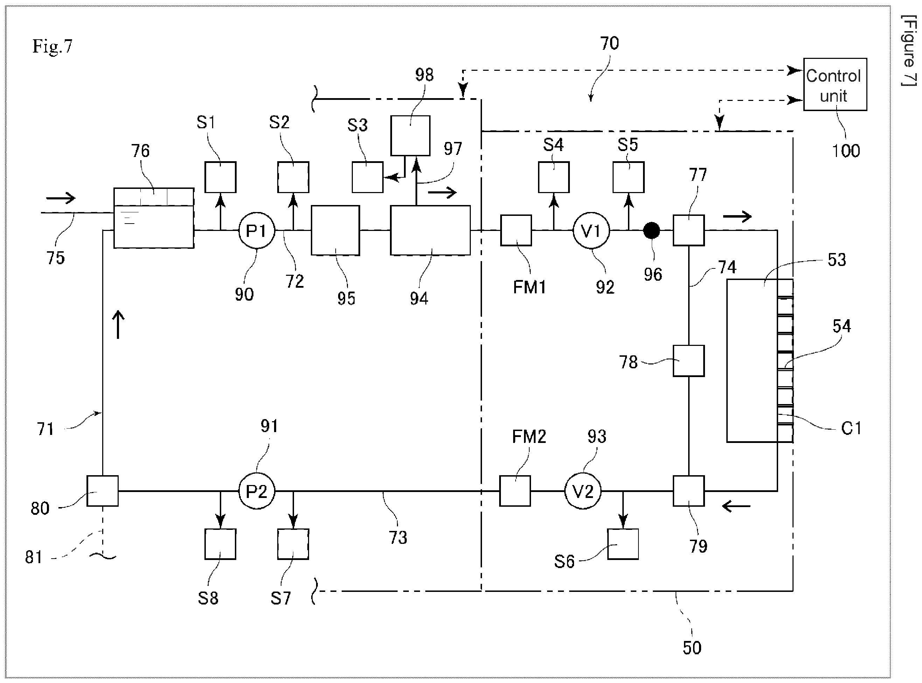

Figure 7 is a diagram illustrating a schematic configuration of paint supply mechanism 70 and the like. The main constituents of paint supply mechanism 70 are paint circulation channel 71, external supply channel 75, air bubble removal member 76, supply pump 90, suction pump 91, air operate paint regulator (AOPR) 92, secondary side proportional controlling valve 93, degassing module 94, removal filter 95, orifice 96, pressure sensors S1 to S8, first flow meter FM1, and second flow meter FM2.

Paint circulation channel 71 is a channel for circulating the paint, and it includes paint supply channel 72, return flow channel 73, and bypass channel 74. Paint supply channel 72 is a channel to supply the paint supplied from external supply channel 75 or returned from return flow channel 73 towards painting head 53, and it is connected to supply side channel 57 described above.

Return channel 73 is a channel that is connected to discharge side major flow channel 61 of painting head 53, and it will return the paint that was not discharged by painting head 53 back to air bubble removal member 76.

Bypass channel 74 is a channel that connects paint supply channel 72 and return flow channel 73. In other words, when bypass channel 74 is provided in parallel with painting head 53, if it is not possible to discharge paint from painting head 53, the paint will be flowed to this bypass channel 74 by switching the operation of three-way valve 77, which will be described later.

External supply channel 75 is a conduit to supply the paint that may be supplied from the storage site side of the paint, such as a circulation tank, to the interior of the tank body of air bubble removal member 76.

Air bubble removal member 76 is a member for removing any air bubbles that may be contained within the paint. This air bubble removal member 76 may be provided at a stable site at which the position will not change outside of robot arm R1. Also, air bubble removal member 76 is connected to paint supply channel 72 such that it can supply paint, and it is also connected to return flow channel 73 such that it can receive the paint supplied from return flow channel 73. This air bubble removal member 76 is provided with tank body that may be sealed from the outside, and this tank body has an outlet to discharge gas from the air bubbles accumulated therein.

Paint supply channel 72 is also connected to three-way valve 77 on the downstream side of AOPR 92, which will be described later. This three-way valve 77 is connected to the middle of paint supply channel 72 and also to bypass channel 74. Therefore, when painting, the upstream and downstream sides are opened more than three-way valve 77 of paint supply channel 72, resulting in the supply of paint to painting head 53. On the other hand, if no paint is applied, the paint flows from paint supply channel 72 to bypass channel 74, but the flow may be switched such that no paint is supplied to the downstream side of paint supply channel 72 (painting head 53 side).

Also, switch valve 78 is provided in the mid-section of bypass channel 74 described above. Actuating switch valve 78 allows the paint to flow through bypass channel 74.

Further, three-way valve 79 is connected to the downstream side of bypass channel 74 beyond switch valve 78, and this three-way valve 79 is further connected to the upstream side of return flow channel 73 (or in other words, painting head 53 side of return flow channel 73) and the downstream side (in other words, suction pump 91 side described later in return flow channel 73). Therefore, when painting is performed, the upstream and downstream sides are opened more than three-way valve 79 of return flow channel 73, and the paint that is not discharged from painting head 53 flows towards the downstream side of return flow channel 73. On the other hand, when no painting is performed, three-way valve 79 is switched such that the paint flowing through bypass channel 74 flows to the downstream side of return flow channel 73 (suction pump 91 side).

Also, within return flow channel 73, switching valve 80 is installed downstream of suction pump 91, which will be described later. Switching valve 80 is also a three-way valve, and is connected to outlet 81 in addition to the upstream and downstream sides of return flow channel 73. In the normal state, this switching valve 80 will be in a state in which paint flows in the upstream and downstream sides of return flow channel 73. However, if, for example, liquid to be used for washing flows from paint supply channel 72 to return flow channel 73 via painting head 53 or bypass channel 74, the actuation of switching valve 80 is switched, and said liquid to be used for washing (waste liquid) described above is discharged through discharge channel 81.

Return channel 73 is connected to air bubble removal member 76 described above on the downstream side of switching valve 80.

In addition, supply pump 90 is connected to the middle part of paint supply channel 72. Supply pump 90 corresponds to the paint transfer means and the paint supply means. Supply pump 90 is a means for applying positive pressure to the paint flowing through paint supply channel 72 towards the downstream side of said supply pump 90. As supply pump 90, it is preferable to use a gear pump that can control the supply amount of paint by controlling the rotational speed. However, supply pump 90 may use a pump other than a gear pump. The operation of this supply pump 90 may be controlled by control unit 100, which will be described later. Thereby, the operation of supply pump 90 may be controlled to be a predetermined pressure set point.

In addition, suction pump 91 is connected to the middle part of return flow channel 73. Suction pump 91 corresponds to the paint transfer means and paint recovery means. Suction pump 91 is a means of applying a negative pressure to the paint flowing through return flow channel 73 on the upstream side of said suction pump 91. As suction pump 91, it is preferable to use a gear pump that can control the supply amount of paint by controlling the rotational speed, similar to supply pump 90 described above. However, suction pump 91 may also use a pump other than a gear pump. The operation of this suction pump 91 may similarly be controlled by control unit 100, which will be described later. As a result, the operation of the suction pump 91 may be controlled such that its downstream side will be a predetermined pressure set point.

Also, in paint supply channel 72, AOPR 92 is installed on the downstream side of supply pump 90. AOPR 92 is a regulator for paint to control (maintain) the pressure of the paint supplied from said AOPR 92 according to the air pressure that may be inputted. In other words, AOPR 92 is provided in order to control (maintain) the pressure of the paint supplied from AOPR 92 at a predetermined ratio, such as, for example, 1/20 to 2 times greater than the air pressure that may be inputted. In this way, AOPR 92 is controlled by air pressure, not electrically, allowing it to be used even in explosion-proof environments in which it is difficult to use electrical equipment.

AOPR 92 as described above may be controlled in control unit 100 described below, enabling the degree of opening to be adjusted according to the control air pressure. As a result, this allows the pressure downstream of AOPR 92 to be controlled to be a predetermined pressure set point in response to the pressure upstream of AOPR 92.

Also, in return flow channel 73, secondary side proportional controlling valve 93 is installed on the upstream side of suction pump 91. Secondary side proportional controlling valve 93 mitigates the flow ripple in suction pump 91 and suctions the paint at a constant pressure (negative pressure). This secondary side proportional controlling valve 93 may similarly be controlled by control unit 100 to be described later, enabling the adjustment of the degree of opening according to the control air pressure or electrical signals. As a result, this allows the pressure upstream of said secondary side proportional controlling valve 93 to be controlled to be a predetermined pressure set point in response to the pressure downstream of secondary side proportional controlling valve 93.

In the present example of embodiment, AOPR 92 is installed upstream of painting head 53, and this AOPR 92 controls the supply pressure of the paint. Therefore, the pressure variation of the supplied paint can be reduced in secondary side proportional controlling valve 93 when compared to using an electrically-controlled proportional controlling valve rather than AOPR 92. Therefore, pressure control of secondary side proportional controlling valve 93 is facilitated based on control unit 100.

Also, in paint supply channel 72, degassing module 94 is installed downstream of supply pump 90 and upstream of AOPR 92. Degassing module 94 is installed downstream of paint supply channel 72 beyond removal filter 95 described below, and is a member for removing (degassing) dissolved gases that may be dissolved in the paint.

Also, in paint supply channel 72, removal filter 95 is installed upstream of degassing module 94 and downstream of supply pump 90. Removal filter 95 removes foreign matter that may be contained in the paint flowing through paint supply channel 72. Removal filter 95 ensures that painting head 53 can continue to operate normally by, for example, removing gross foreign matter and pigment aggregates from paints containing pigments.

It should be noted that an additional removal filter similar to removal filter 95 described above may be provided between degassing module 94 and AOPR 92. In this case, the additional removal filter may correspond to a pressure boosting mechanism, but it is also acceptable for removal filter 95, which is different from the additional removal filter, to correspond to a pressure boosting mechanism, or for both the additional removal filter and removal filter 95 to correspond to a pressure boosting mechanism. It is also acceptable to provide a removal filter between degassing module 94 and AOPR 92 without providing removal filter 95 upstream of degassing module 94.

Also, in paint supply channel 72, orifice 96 that corresponds to the pressure boosting mechanism is installed downstream of AOPR 92. This orifice 96 is a site with a narrower (smaller) inner diameter than that of the other parts of paint supply channel 72, and it has a predetermined length. However, orifice 96 may also be configured such that it does not have such a length, for example by providing an orifice plate.

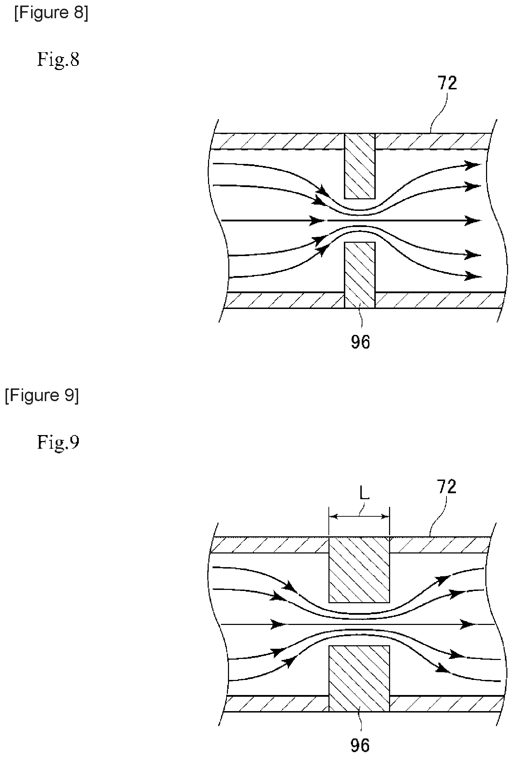

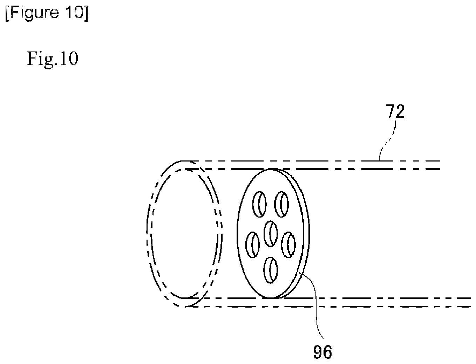

In addition, various types of orifice 96 may be used. For example, orifice 96 may be of a type in which the inner diameter of the central portion of paint supply channel 72 is narrowed for a predetermined length, as shown in Figure 8. In this case, orifice 96 may be of a type in which the inner diameter of the central portion of paint supply channel 72 is narrowed for only predetermined length L, which is sufficiently longer than the configuration shown in Figure 8, as shown in Figure 9. Orifice 96 may also be of a type that is constructed of a plurality of small diameter holes, as shown in Figure 10. Orifice 96 may also be a variable orifice for which the opening area may vary as a result of air pressure control or electrical control.

One example of the dimensions of paint supply channel 72 and orifice 96 is to reduce the inner diameter of paint supply channel 72 other than orifice 96 to 2.5 to 8 mm, in which case the inner diameter of orifice 96 will be 0.1 to 5 mm and the length of orifice 96 will be 0.1 to 5 mm, but it is also possible to adopt the appropriate dimensions other than these dimensions.

The presence of the abovementioned orifice 96 results in a pressure drop due to paint viscosity upstream of orifice 96 in paint supply channel 72. As a result, an increase in pressure will occur in AOPR 92. Here, AOPR 92 is in a state in which the minimum pressure value of the operable pressure range is higher than that of the electrically-controlled proportional control valve. Also, AOPR 92 is characterized by the ability to adjust the pressure (pressure control) with a smaller error on the side with a higher input air pressure compared to the side with a lower air pressure.

As an example of the abovementioned control of AOPR 92, as confirmed in an experiment or the like, when a predetermined flow rate has been set for the paint, the air pressure that must be inputted into AOPR 92 is 5 KPa if there is no orifice 96 present in paint supply channel 72. In this case, if the air pressure that must be inputted varies by ±1 KPa from 5 KPa, the pressure will change by approximately 20%. On the other hand, if the specified orifice 96 is provided in paint supply channel 72, the air pressure that must be inputted into AOPR 92 is 17 KPa. In this case, even if the air pressure that must be inputted varies by ±1 KPa from 17 KPa, the pressure fluctuation will be approximately 5.9%, making it possible to reduce the impact of pressure fluctuations.

Also, as another example of the control of AOPR 92, as confirmed in an experiment or the like, if the paint is set to a predetermined flow rate, and there is no orifice 96 in paint supply channel 72, the air pressure that must be inputted into AOPR 92 is 15 KPa. In this case, if the air pressure that must be inputted varies by ±1 KPa from 15 KPa, the pressure will fluctuate by approximately 6.7%. On the other hand, if the specified orifice 96 is provided in paint supply channel 72, the air pressure that must be inputted into AOPR 92 is 39 KPa. In this case, even if the air pressure that must be inputted varies by ±1 KPa from 39 KPa, the pressure fluctuation will be approximately 2.6%, making it possible to reduce the impact of pressure fluctuations.

Next, pressure sensors S1 to S8 and flow meters FM1 and FM2 will be described. In paint supply channel 72, pressure sensor S1 is installed upstream of supply pump 90. In addition, in paint supply channel 72, pressure sensor S2 is installed downstream from supply pump 90 and upstream of removal filter 95. Pressure sensor S1 measures the supply pressure of paint to supply pump 90 and sends the measurement results to control unit 100. In addition, pressure sensor S2 measures the pressure of the paint discharged from supply pump 90, and sends the measurement results to control unit 100.

In this way, pressure sensors S1 and S2 make it possible for the estimated pressure of supply pump 90 to be measured accurately by measuring the pressure of the paint upstream and downstream of supply pump 90. It should be noted that the estimated pressure of supply pump 90 may be the average value of the pressure value of pressure sensor S1 and the pressure value of pressure sensor S2, or it may be the pressure value of either sensor. The abovementioned estimated pressures may also be used to calculate the water load pressure and water head pressure difference described below.

Degassing module 94 described above is also connected to vacuum pump 98 via suction conduit 97. Vacuum pump 98 is an apparatus to depressurize the interior of the housing of degassing module 94 (the interior of the hollow fiber membrane), as described above. This decompression removes (degasses) dissolved gases that may be dissolved in the paint supplied to the housing.

Pressure sensor S3 also measures the pressure of suction conduit 97 between vacuum pump 98 and degassing module 94 described above.

In paint supply channel 72, first flow meter FM1 is installed downstream of degassing module 94 and upstream of AOPR 92. First flow meter FM1 measures the flow rate of the paint fed to AOPR 92 and transmits the measurement results to control unit 100. Because this first flow meter FM1 is a contactless flow meter without any moving parts, such as an ultrasonic, optical, electromagnetic, or thermal meter, etc., first flow meter FM1 may be installed outside paint supply channel 72. Note that it is also acceptable to use a flow meter with moving parts as first flow meter FM1.

Here, when first flow meter FM1 is an optical meter, at least the portion of paint supply channel 72 in which the flow rate is measured by first flow meter FM1 is constructed to be transparent. However, if first flow meter FM1 is an ultrasonic meter instead of an optical meter, at least the portion of paint supply channel 72 in which the flow rate is measured by first flow meter FM1 does not need to be transparent.

Also, in paint supply channel 72, pressure sensor S4 is installed downstream of first flow meter FM1 and upstream of AOPR 92. Also, in paint supply channel 72, pressure sensor S5 is installed downstream of AOPR 92 and upstream of three-way valve 77. Pressure sensor S4 measures the supply pressure of paint to AOPR 92 and sends the measurement results to control unit 100. In addition, pressure sensor S5 measures the pressure of the paint discharged from AOPR 92, and sends the measurement results to control unit 100.

In this way, pressure sensors S4 and S5 allow the estimated pressure of AOPR 92 to be measured accurately by measuring the pressure of the paint upstream and downstream of AOPR 92. It should be noted that the estimated pressure of AOPR 92 may be the average value of the pressure value of the pressure sensor S4 and the pressure value of the pressure sensor S5, or may be the pressure value of either.

Although it is preferable that the abovementioned pressure sensor S4 is provided in paint supply mechanism 70, it is also acceptable to adopt a configuration in which this pressure sensor S4 is omitted. In addition, pressure sensor S4 may be provided on the painting head unit 50 side, but it may be provided on the second turning arm 25 side (robot arm R1 side). Pressure sensor S4 may also be provided upstream of first flow meter FM1.

Also, in return flow channel 73, pressure sensor S6 is installed downstream of three-way valve 79 and upstream of secondary side proportional controlling valve 93. Also, in return flow channel 73, pressure sensor S7 is installed further downstream of flow meter FM2 (to be described later) that is downstream of secondary side proportional controlling valve 93. Pressure sensor S6 measures the supply pressure of paint to secondary side proportional controlling valve 93 and sends the measurement results to control unit 100. Pressure sensor S7 also measures the pressure of the paint discharged from secondary side proportional controlling valve 93 (in other words, the pressure of the paint supplied to suction pump 91) and sends the measurement results to control unit 100.

In this way, pressure sensors S6 and S7 enable the accurate measurement of the estimated pressure of secondary side proportional controlling valve 93 by measuring the pressure of the paint upstream and downstream of secondary side proportional controlling valve 93. The estimated pressure of secondary side proportional controlling valve 93 may be the average value of the pressure value of the pressure sensor S6 and the pressure value of the pressure sensor S7, or may be the pressure value of either.

It should be noted that in return flow channel 73, the pressure sensor may also be positioned downstream of secondary side proportional controlling valve 93 and upstream of flow meter FM2.

Also, in return flow channel 73, second flow meter FM2 is installed on the downstream side of secondary side proportional controlling value 93 Second flow meter FM2 measures the flow rate of the paint fed to suction pump 91 and transmits the measurement results to control unit 100. This second flow meter FM2, as is the case with first flow meter FM1 described above, is also a contactless flow meter without any moving parts, such as an ultrasonic, optical, electromagnetic, or thermal meter, etc., so the detailed description of this part is omitted. Note that it is also acceptable to use a flow meter with moving parts as second flow meter FM2.

Also, in return flow channel 73, pressure sensor S8 is installed downstream of suction pump 91 and upstream of switching valve 80 described above. Pressure sensor S8 measures the pressure of the paint discharged from suction pump 91 and sends the measurement results to control unit 100.

In this way, pressure sensors S7 and S8 enable the accurate measurement of the estimated pressure of suction pump 91 by measuring the pressure of the paint upstream and downstream of suction pump 91. The estimated pressure of suction pump 91 may be the average value of the pressure value of pressure sensor S7 and the pressure value of pressure sensor S8, or it may be the pressure value of either sensor.

### (1-8. Schematic configuration of the control unit)

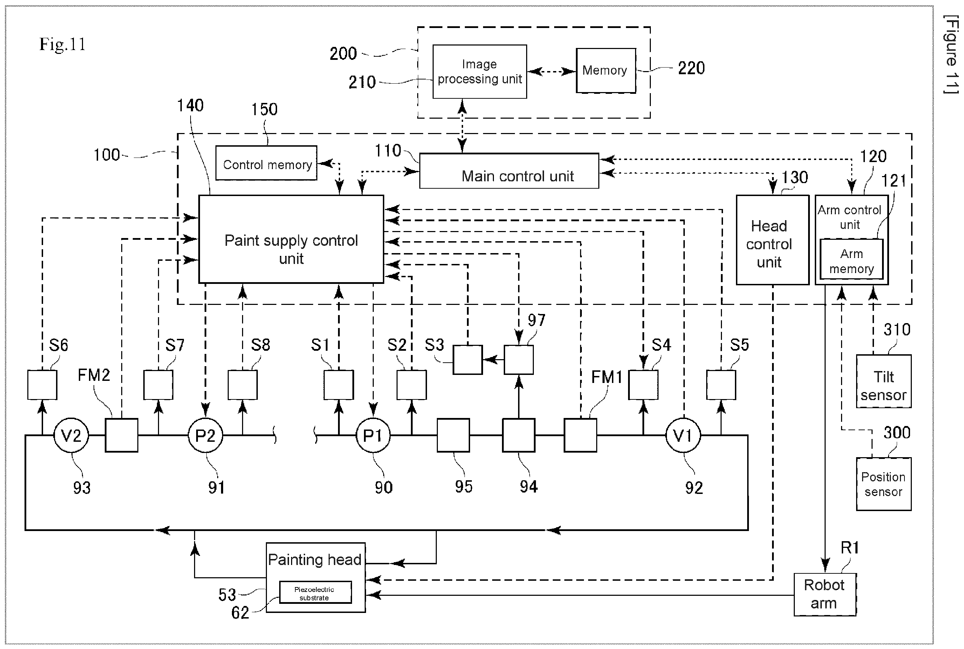

Next, a schematic configuration of control unit 100 for controlling the actuation of painting robot 10 will be described. Figure 11 is a diagram that shows a controlled schematic configuration centered on control unit 100 of painting robot 10. As shown in Figure 11, the primary constituents of control unit 100 are main control unit 110, arm control unit 120, head control unit 130, paint supply control unit 140, control memory 150, position sensor 300, and tilt sensor 310. Further, painting robot 10 is connected to image processing apparatus 200 to constitute the painting robot system.

Main control unit 110, arm control unit 120, head control unit 130, paint supply control unit 140, and image processing unit 210 described below are composed of a CPU (Central Processing Unit), a memory 220 such as a storage site (Read Only Memory (ROM), Random Access Memory (RAM), or non-volatile memory, etc.), and other elements. Image processing unit 210 may use a GPU (Graphics Processing Unit) together with a CPU having excellent image processing performance or in place of the CPU.

Of the above-described control configuration, main control unit 110 is the portion that transmits a predetermined control signal to the above-described arm control unit 120, head control unit 130, and paint supply control unit 140 such that each motor (first to sixth motor) of robot arm R1, each actuation unit of paint supply mechanism 70, and piezoelectric substrate 62 will cooperate to execute the painting of the object to be painted.

Arm control unit 120 is also the portion that controls the drive of each motor (first to sixth motor) of robot arm R1 described above. Arm control unit 120 is provided with an arm memory (121), wherein the arm memory 121 stores data relating to the trajectory of painting head 53 (trajectory data), which is created by robot teaching in consideration of the coating width of painting head 53 that can be coated, and posture data relating to the posture such as the inclination of painting head 53.

Further, arm control unit 120 controls each motor (first to sixth motor) of robot arm R1 described above based on the trajectory data and posture data stored in the arm memory 121 and the image processing in image processing unit 210, which will be described later. As a result of this control, painting head 53 can pass through the desired position to execute painting at the desired speed or can stop at a predetermined position. The arm memory may be provided by painting robot 10, but it is also acceptable for arm memory 121 to be outside of painting robot 10, enabling the transmission and receipt of information to arm memory 121 via wired or wireless communication means.

Head control unit 130 is also the portion that controls the operation of piezoelectric substrate 62 within painting head unit 50 based on the image processing in image processing apparatus 200. This head control unit 130 controls the discharge of paint based on the segmented paint data corresponding to the position when the predetermined position in the trajectory data has been reached by means of a means to detect the positions of position sensor 300 and tilt sensor 310, etc. described below. In this case, the drive frequency of piezoelectric substrate 62 is controlled to control the number of dots (number of droplets) discharged from nozzle 54, or the voltage applied to piezoelectric substrate 62 is controlled in order to control the size of the droplets discharged from nozzle 54 such that the film thickness applied to the vehicle is uniform.

Paint supply control unit 140 is also the part that controls the supply of paint to painting head 53, and more specifically, it controls the operation of each actuation site in paint supply mechanism 70, such as supply pump 90, suction pump 91, AOPR 92, secondary side proportional controlling valve 93, vacuum pump 98, three-way valves 77 and 79, switch valve 78, and switching valves 80, or the like. At this time, paint supply control unit 140 preferably controls the actuation of the actuation site, such as the above-described pumps and valves such that the paint may be supplied to painting head 53 at a constant pressure. However, it is also acceptable for paint supply control 140 to control the actuation of an actuation site, such as the pump or valves described above, such that the paint may be supplied to painting head 53 at a constant flow rate.

Here, paint supply control unit 140 can access control memory 150, and as a result of this access, it is possible to read the pressure set point stored in control memory 150, which will be described later.

Also, position sensor 300 is a sensor that detects the current position of painting head 53. Examples of the sensors that may be used as position sensor 300 include rotary encoders, resolvers, laser sensors, and various other sensors. In addition, tilt sensor 310 is a sensor that detects an angle of inclination of painting head 53, and corresponds to an angle detection means. Examples of the sensors that may be used as tilt sensor 310 include, for example, gyro sensors, acceleration sensors, tilt sensors, and various other sensors.

### (2. Experimental results)

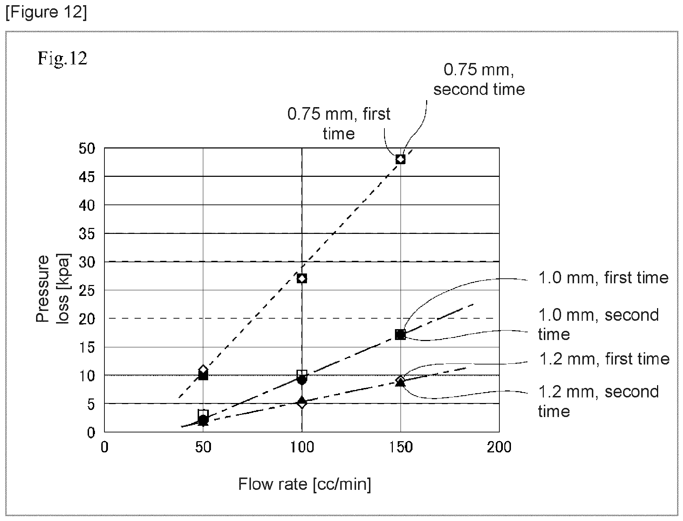

The experimental results when orifice 96 is provided in paint supply channel 72 as described above are described based on Figure 12.

Figure 12 is a diagram that shows the experimental results for the relationship between the flow rate and pressure losses when the inner diameter of orifice 96 is set to be 0.75 mm, 1.0 mm, and 1.2 mm. In Figure 12, for example, when the inner diameter of orifice 96 was set to be 0.75 mm, the pressure loss at a flow rate of 50 cc/min in paint supply channel 72 was 10 KPa in the first experiment, and 11 KPa in the second experiment. In addition, under the same conditions, when setting the inner diameter of orifice 96 to be 1.0 mm, the pressure loss was 3 KPa in the first experiment, and 2 KPa in the second experiment. In addition, under the same conditions, when setting the inner diameter of orifice 96 to be 1.2 mm, the pressure loss was 2 KPa in the first experiment, and 2 KPa in the second experiment.

Also, when the inner diameter of orifice 96 was set to be 0.75 mm, the pressure loss at a flow rate of 100 cc/min in paint supply channel 72 was 27 KPa in the first experiment, and 27 KPa in the second experiment. In addition, under the same conditions, when setting the inner diameter of orifice 96 to be 1.0 mm, the pressure loss was 10 KPa in the first experiment, and 9 KPa in the second experiment. In addition, under the same conditions, when setting the inner diameter of orifice 96 to be 1.2 mm, the pressure loss was 5 KPa in the first experiment, and 6 KPa in the second experiment.

Also, when the inner diameter of orifice 96 was set to be 0.75 mm, the pressure loss at a flow rate of 150 cc/min in paint supply channel 72 was 48 KPa in the first experiment, and 48 KPa in the second experiment. In addition, under the same conditions, when setting the inner diameter of orifice 96 to be 1.0 mm, the pressure loss was 17 KPa in the first experiment, and 17 KPa in the second experiment. In addition, under the same conditions, when setting the inner diameter of orifice 96 to be 1.2 mm, the pressure loss was 9 KPa in the first experiment, and 9 KPa in the second experiment.

### (3. Regarding effects)

Painting robot 10 that has the structure described above is provided with painting head unit 50 comprising a plurality of nozzles 54 to eject droplets and painting head 53 that is provided with piezoelectric substrate 62 that may be driven to eject the droplets from nozzles 54, robot arm R1 to which painting head unit 50 is mounted at the tip and that will move said painting head unit 50 to a desired position, and paint supply mechanism 70 that may be installed between robot arm R1 and painting head unit 50. Further, paint supply mechanism 70 is provided with paint supply channel 72 to provide paint towards painting head 53, return flow channel 73 that is connected to the paint discharge side of painting head 53 in order to recover paint that was not discharged from nozzle 54, AOPR 92 (a pneumatic control valve) that has been installed in paint supply channel 72 for which the valve opening position can be adjusted in response to the controlled air pressure, and orifice 96 (a pressure boosting mechanism) that has been installed on the downstream side of paint supply channel 72 facing painting head 53 side from AOPR 92 (the pneumatic control valve) or on the upstream side of AOPR 92 (the pneumatic control valve) and that will increase the pressure of the paint that may be supplied to AOPR 92 (the pneumatic control valve).

By using this type of configuration, it will be possible to increase the pressure losses when the paint flowing through paint supply channel 72 flows through orifice 96 (the pressure boosting mechanism). Therefore, it will be possible to increase the supply pressure of the paint on the upstream side of paint supply channel 72 to be higher than that in orifice 96 (the pressure boosting mechanism). As a result, this allows the rate of pressure variation to be reduced relative to the pressure value that may be inputted into the paint upstream of orifice 96 (the pressure boosting mechanism).

In other words, in the absence of orifice 96 (the pressure boosting mechanism), there is a possibility that a slight fluctuation in pressure could cause a change in the flow rate of the paint, thereby reducing the paint quality due to variations in the amount of paint discharged from nozzle 54. However, as described above, the presence of orifice 96 (the pressure boosting mechanism) enables convergence to a range that does not affect paint quality even if some pressure fluctuation occurs upstream of orifice 96 (the pressure boosting mechanism) in paint supply channel 72, resulting in improved paint quality.

In addition, because it is possible to ensure that the upstream side of paint supply channel 72 has a higher paint supply pressure than orifice 96 (the pressure boosting mechanism), it will be possible to use AOPR 92 (the pneumatic valve), which has an operable pressure range that is higher than that of a proportional controlling valve, which is an electrical device. Therefore, it will be possible to avoid using a proportional controlling valve, which is an electrical device. As a result, painting robot 10 can be configured to be suitable for an explosion-proof environment.

In addition, the use of AOPR 92 (the pneumatic valve) enables the operable pressure range to be expanded relative to the pressure set by the user when compared to the range that may be used with a proportional controlling valve, which is an electrical device.

In addition, in the present example of embodiment, return flow channel 73 is provided with secondary side proportional controlling valve 93 (the electrical control valve) that can adjust the valve opening position through electrical operation. When using this type of configuration, in paint circulation channel 71, AOPR 92 (the pneumatic control valve) is installed upstream of secondary side proportional controlling valve 93 (the electrical control valve). Therefore, the pressure in the input side (upstream; primary) of secondary side proportional controlling valve 93 (the electrical control valve) can be stabilized, thereby facilitating the pressure control in the output side (downstream; secondary) of secondary side proportional controlling valve 93 (the electrical control valve).

Also, in the present example of embodiment, pressure boosting mechanism is orifice 96 that has an inner diameter that is narrower than that of paint supply channel 72, and orifice 96 may be constructed of a single hole as shown in Figure 8 or Figure 9, or it may be constructed of a plurality of holes as shown in Figure 10. When using this type of configuration, if the paint passes through orifice 96, it will pass through a single hole or multiple holes. Therefore, it is possible to exert staggering stress on the paint during its passage, making it possible to reduce the viscosity of the paint. As a result, the paint after passing through orifice 96 can be favorably discharged from nozzle 54, and it will be possible to increase the flowability of any paint that was not discharged from nozzle 54 when it is returned via return flow channel 73.

Also, in the present example of embodiment, the pressure boosting mechanism can be a removal filter that removes foreign matter contained in the paint flowing through paint supply channel 72. When using this type of configuration, the paint will pass through a plurality of holes present in the removal filter. Therefore, it is possible to exert staggering stress on the paint during its passage, making it possible to reduce the viscosity of the paint. As a result, the paint after passing through the removal filter can be favorably discharged from nozzle 54, and it will be possible to increase the flowability of any paint that was not discharged from nozzle 54 when it is returned via return flow channel 73.

In addition, in the present example of embodiment, paint supply mechanism 70 is provided with bypass channel 74 that connects paint supply channel 72 and return flow channel 73, and that distributes the paint in parallel with painting head 53, and orifice 96 (the pressure boosting mechanism) is provided upstream of paint supply channel 72 beyond bypass channel 74.

By using this type of configuration, orifice 96 (the pressure boosting mechanism) is provided upstream of paint supply passage 72 beyond bypass channel 74, and therefore, any paint that was not discharged from painting head 53 will also pass through orifice 96 (the pressure boosting mechanism). As a result, the viscosity of the paint can be reduced as it passes through orifice 96 (the pressure boosting mechanism). Therefore, by circulating paint that was not discharged from painting head 53 through bypass channel 74 and passing it through orifice 96 (the pressure boosting mechanism), it is possible to achieve a favorable reduction in paint viscosity.

Also, in the present example of embodiment, orifice 96 can be configured to enable the adjustment of the opening position of the flow path through which the paint flows. By using this type of configuration, orifice 96 can adjust the valve opening position of the flow path such that, when cleaning paint supply channel 72 or the like, the opening position of orifice 96 can be increased to improve the clean properties. Adjusting the opening position of orifice 96 also enables the adjustment of the operability of AOPR 92 (the pneumatic control valve) to a favorable range.

### (4. Variants)

Although the first example of embodiment of the present invention was described above, the present invention may be changed in various ways in addition to the abovementioned example of embodiment. The variants are described below.

The example of embodiment described above utilizes a configuration that is provided with pressure sensors S1 to S8, first flow meter FM1, and second flow meter FM2. However, when providing first flow meter FM1 and second flow meter FM2, at least one of pressure sensors S1 to S8 may be omitted, and if pressure sensors S1 to S8 are provided, at least one of either first flow meter FM1 or second flow meter FM2 may be omitted.

Also, in the example of embodiment described above, orifice 96 is provided upstream of three-way valve 77 in paint supply channel 72. However, orifice 96 may be provided downstream of three-way valve 77 and upstream of painting head 53 in paint supply channel 72.

Also, in the example of embodiment described above, orifice 96 is provided downstream of AOPR 92 in paint supply channel 72. However, if the pressure range of AOPR 92 is not as high as that of secondary side proportional controlling valve 93 or there is a site other than orifice 96 that causes pressure losses, a configuration omitting orifice 96 may be employed.

### [Explanation of References]

10 ... Painting robot, 20 ... Robots main body, 21... Base, 22a ... First rotating shaft, 22b ... Second rotating shaft, 22c ... Third rotating shaft, 22d ... Fourth rotating shaft, 22e ... Fifth rotating shaft, 22f ... Sixth rotating shaft, 24 ... First turning arm, 25 ... Second turning arm, 26 ... Rotating arm, 27... Wrist unit, 50 ... Painting head unit, 52 ... Nozzle forming surface, 53... Painting head, 54... Nozzle, 55... Nozzle row, 55A ... First nozzle row, 55B ... Second nozzle row, 57... Supply side major flow channel, 58... Row direction supply channel, 59... Nozzle pressurization chamber, 59a... Nozzle supply channel, 59b ... Nozzle discharge channel, 60... Row direction discharge channel, 61... Discharge side major flow channel, 62 ... Piezoelectric substrate, 63a ... Piezoelectric ceramic layer, 63b ... Piezoelectric ceramic layer, 64 ... Common electrode, 65 ... Individual electrode, 70 ... Paint supply mechanism, 71 ... Paint circulation channel, 72 ... Paint supply channel, 73 ... Return flow channel, 74 ... Bypass channel, 75 ... External supply channel, 76 ... Air bubble removal member, 77 ... Three-way valve, 78 ... Switch valve, 79 ... Three-way valve, 80 ... Switching valve, 81 ... Discharge channel, 90 ... Supply pump (corresponding to the paint supply means), 91 ... Suction pump (corresponding to the paint recovery means), 92 ... AOPR (corresponding to the pneumatic control valve), 93 ... Secondary side proportional controlling valve (corresponding to the electrical control valve), 94 ... Degassing module, 95 ... Removal filter, 96 ... Orifice (corresponding to the pressure boosting mechanism), 97 ... Suction conduit, 98 ... Vacuum pump, 100 ... Control unit, 110 ... Main control unit, 120 ... Arm control unit, 121 ... Arm memory, 130 ... Head control unit, 140 ... Paint supply control unit, 150 ... Control memory, 200 ... Image processing apparatus, 210 ... Image processing unit, 220 ... Memory, 300 ... Position sensor, 310 ... Tilt sensor (corresponding to the angle detection means), FM1 ... First flow meter, FM2 ... Second flow meter, R1 ... Robot arm, S1 to S8 ... Pressure sensors

## Claims

1. A painting robot (10) to paint a vehicle that is **characterized by** the fact that it is provided with
a painting head unit (50) comprising a plurality of nozzles (54) to eject droplets and a painting head (53) that is provided with a piezoelectric substrate (62) that may be driven to eject said droplets from said nozzles (54),
a robot arm (R1) to which said painting head unit (50) is mounted at the tip and that will move said painting head unit (50) to a desired position,
and a paint supply mechanism (70) that may be installed between said robot arm (R1) and said painting head unit (50),
wherein said paint supply mechanism (70) is provided with
a paint supply channel (72) to provide paint towards said painting head (53),
a return flow channel (73) that is connected to the paint discharge side of said painting head (53) in order to recover paint that was not discharged from said nozzle (54),
a pneumatic control valve (92) that has been installed in said paint supply channel (72) for which the valve opening position can be adjusted in response to the controlled air pressure,
and a pressure boosting mechanism (96) that has been installed on the downstream side of said paint supply channel (72) facing said painting head (53) side from said pneumatic control valve (92) or on the upstream side of said pneumatic control valve (92) and that will increase the pressure of the paint that may be supplied to said pneumatic control valve (92).

2. The painting robot according to claim 1 that is **characterized by** the fact that said return flow channel (73) is provided with an electrical control valve (93) that can adjust the valve opening position through electrical operation.

3. The painting robot according to claim 1 or 2 that is **characterized by** the fact that said pressure boosting mechanism (96) is an orifice with an inner diameter that is narrower than that of said paint supply channel (72), and said orifice is constructed of a single hole or a plurality of holes.

4. The painting robot according to any one of the preceding claims that is **characterized by** the fact that
said pressure boosting mechanism is a removal filter to remove foreign matter contained within the paint flowing through said paint supply channel (72).

5. The painting robot according to any one of the preceding claims that is **characterized by** the fact that
said paint supply mechanism (70) is provided with a bypass channel (74) connecting said paint supply channel (72) and said return flow channel (73) in order to distribute the paint in parallel to said painting head (53),
wherein the pressure boosting mechanism (95, 96) is installed on the upstream side of said paint supply channel (72) in relation to said bypass channel (74).

6. The painting robot according to claim 3 that is **characterized by** the fact that said orifice (96) enables adjustment of the opening of the flow channel through which said paint flows.
